(19) Europäisches Patentamt

European Patent Office

Office européen des brevets

(11) Veröffentlichungsnummer: **0 375 598**
**A2**

(12) **EUROPÄISCHE PATENTANMELDUNG**

(21) Anmeldenummer: 89710080.6

(22) Anmeldetag: 01.12.89

(51) Int. Cl.⁵: **G01N 27/90, G21C 17/00**

(30) Priorität: 22.12.88 DE 3843123

(43) Veröffentlichungstag der Anmeldung:
27.06.90 Patentblatt 90/26

(84) Benannte Vertragsstaaten:
FR GB SE

(71) Anmelder: **Institut Dr. Friedrich Förster**
**Prüfgerätebau GmbH & Co. KG**
**Postfach 1564 In Laisen 70**
**D-7410 Reutlingen 1(DE)**

(72) Erfinder: **Giebe, Harald**
**Birkenstrasse 5**
**D-7410 Reutlingen 11(DE)**

(54) **Vorrichtung zum Bewegen von Schubschläuchen im Inneren von Rohren.**

㊗ Es wird eine Treibervorrichtung (10) beschrieben, mit deren Hilfe ein Schubschlauch bzw. ein Kabel (12) in das Innere eines Rohres (110) eingetrieben und aus demselben wieder herausgezogen werden kann. Die Einrichtung kommt zur Anwendung u. a. bei der Wartungsprüfung von Wärmetauscher- und Kondensatorrohren in Kraftwerken, Chemieanlagen und dergleichen. Dabei wird die Kraftübertragung zwischen Treibanordnungen (18, 20) einerseits und dem Schubschlauch (12) andererseits in der Weise ausgeführt, daß man die entsprechend gestaltete Rückseite von zwischen Rollen (24 - 34) geführten Treibriemen (36) mit dem Umfang des Schubschlauches (12) zusammenwirken läßt.

Fig.1

EP 0 375 598 A2

## Vorrichtung zum Bewegen von Schubschläuchen im Inneren von Rohren

Die Erfindung betrifft eine Vorrichtung zum Bewegen von Schubschläuchen im Inneren von Rohren gemäß dem Oberbegriff von Anspruch 1. Es wird dabei in erster Linie an Schubschläuche gedacht, an deren Spitze sich eine Prüfsonde zum Prüfen von Eigenschaften der Rohre befindet, z. B. eine Wirbelstromprüfsonde. Der Schubschlauch birgt in diesen Fällen in seinem Inneren das Anschlußkabel der Prüfsonde, wenn nicht, was bei entsprechender Beschaffenheit desselben oft möglich ist, das Anschlußkabel selbst als Schubschlauch dient. Es sind aber auch andere Anwendungen der Erfindung denkbar, etwa die Reinigung der Rohrinnenwand oder dergleichen. Hinsichtlich der Rohre handelt es sich vorwiegend um Anwendungsfälle, in denen bei einer Vielzahl von Rohren in rascher Folge ein Schubschlauch eingeführt und herausgezogen werden muß, also etwa um die Wartungsprüfung von Wärmetauscher- und Kondensatorrohren in Kraftwerken, Chemieanlagen, usw. in eingebautem Zustand. Solche Wartungsprüfungen müssen bekanntermaßen bei den genannten Rohren in mehr oder weniger regelmäßigen Abständen durchgeführt werden.

Zum Bewegen des Schubschlauches im Inneren der Rohre werden bei der Wartungsprüfung sogenannte Sondentreiber benutzt. Ein solcher ist ausführlich beschrieben in US-PS 4 757 258, wo er zum Eintreiben eines Schubschlauches mit Prüfsonde in die Mündungen von Dampferzeugerrohren dient. Der Schubschlauch wird hier von zwei synchron laufenden Antriebsrollen voranbewegt, denen jeweils eine Stützrolle gegenübersteht. Ein an der Sonde angebrachtes Treibrad, das von einem Pneumatikmotor angetrieben wird und an der Rohrinnenwand angreift, unterstützt die Bewegung des Schubschlauches. Die Druckluftleitung für den Pneumatikmotor befindet sich ebenso wie das Anschlußkabel der Sonde im Inneren des Schubschlauches. Der Sondentreiber wird von einem Manipulator an die entsprechenden Rohröffnungen herangeführt. Ähnliche Treiber sind auch für manuelle Handhabung bekannt, jedoch ohne den zusätzlichen Antrieb der Sonde durch einen Pneumatikmotor.

Während die ersteren Treiber durch den zusätzlichen pneumatischen Antrieb der Sonde sehr aufwendig und umständlich sind, insbesondere durch die notwendig werdende Druckluftleitung im Schubschlauch, sind die letzteren mit erheblichen funktionellen Mängeln belastet. Bei der Kraftübertragung mittels Rollen steht jeweils nur eine sehr begrenzte Berührungsfläche am Schubschlauch zur Verfügung. Dies wird durch einen erhöhten Andruck der Rollen ausgeglichen. Das hat jedoch zur Folge, daß ein Rutschen zwischen Rolle und Berührungsfläche, das bei erhöhtem Widerstand gegen die Bewegung des Schubschlauches auftreten kann, dieser an der Berührungsstelle beschädigt oder sogar zerstört werden kann. Begünstigt wird dieser negative Umstand noch dadurch, daß von einer zuvor stattgefundenen Reinigung der Rohre häufig noch Flüssigkeitsreste übrig sind, die den Schubschlauch schlüpfrig machen. Ein weiterer unerwünschter Effekt tritt insbesondere dann in Erscheinung, wenn das Sondenanschlußkabel selbst als Schubschlauch dient. Der starke Andruck der Rollen bewirkt eine Verformung des Kabels, die sich fortlaufend ändert. Das wiederum hat einen Anstieg des Störpegels zur Folge, der dem Prüfsignal überlagert ist.

Die Erfindung stellt sich demgegenüber die Aufgabe, eine Vorrichtung der eingangs definierten Art zu schaffen, bei der die Kraftübertragung zuverlässig und sicher erfolgt.

Die erfindungsgemäße Aufgabe wird gelöst durch eine Vorrichtung, die gemäß Anspruch 1 gekennzeichnet ist.

Die Kraftübertragung erfolgt nach der erfindungsgemäßen Lösung nicht mehr wie bisher über eine eng begrenzte Berührungsfläche. Vielmehr bietet die Rückseite des Treibriemens eine weitflächige Berührung mit dem Schubschlauch, die auch bei mäßigem Andruck eine absolut zuverlässige Kraftübertragung gewährleistet. Es werden nicht nur die oben beschriebenen gravierenden Nachteile vermieden, sondern man erzielt darüber hinaus einen ruck- und vibrationsfreien Lauf des Schubschlauches. Der dadurch gesicherte gleichmäßige Sondentransport führt zu exakten, reproduzierbaren und lokalisierbaren Prüfergebnissen. Eine hohe Prüfgeschwindigkeit ist möglich und der natürliche Verschleiß von Schubschlauch bzw. Anschlußkabel bleibt dennoch in vernünftigen Grenzen.

Einer vorteilhaften Ausgestaltung der Erfindung zufolge kommen zwei Treibanordnungen zum Einsatz, die sich bezüglich des Schubschlauches diametral gegenüberstehen und die in diametraler Richtung gegeneinander verstellbar sind. Dadurch kann der Schubschlauch bequem im auseinandergefahrenen Zustand der Treibanordnungen eingelegt werden. Das oftmals lästige Einfädeln des Schubschlauches in die Treibervorrichtung entfällt ganz. Ein Einlegen des Schubschlauches ist auch dann möglich, wenn etwa an seinen beiden Enden Prüfsonde und Anschlußstekker fest angeschlossen sind. Auch können ohne weiteres, insbesondere wenn gemäß einer anderen Ausgestaltung der Erfindung V-förmige Profilnuten an der Rückseite der Treibriemen benutzt werden, Schubschläuche bzw.

Anschlußkabel unterschiedlicher Durchmesser gefahren werden. Ein rasches auswechseln von Prüfsonde-Kabel-Kombinationen ist mit großem Komfort möglich. Nach einer weiteren Ausgestaltung der Erfindung sind zur Zentrierung und Führung des Schubschlauches Führungsdüsen vorgesehen, die Auswechselbar und in zwei Hälften teilbar sind und deren beide Hälften jeweils zusammen mit den beiden Treiberanordnungen in diametraler Richtung verstellt werden. Die vordere der beiden Führungsdüsen kann im Außenbereich konisch gestaltet sein und ist damit in einfacher Weise an unterschiedliche Öffnungsdurchmesser von Rohren angepaßt. Eine andere Ausgestaltung der Erfindung besteht darin, daß nur eine von mehreren Treiberanordnungen angetrieben wird, während eine andere, angetrieben von der Bewegung des Schubschlauches, ihrerseits einen Wegsignalgeber antreibt. Damit wird erreicht, daß immer nur der tatsächliche Weg des Schubschlauches registriert wird, auch wenn einmal unter besonders ungünstigen Umständen ein Schlupf zwischen Schubschlauch und der angetriebenen Treibanordnung eintreten sollte. Weitere Ausgestaltungen der Erfindung sind in Unteransprüchen angegeben.

Im folgenden wird die Erfindung mit Hilfe von Figuren an einem Ausführungsbeispiel genauer erläutert. Die Figuren zeigen im einzelnen:

Fig. 1 ein erfindungsgemäße Vorrichtung im Seitenriß

Fig. 2 die Vorrichtung im Aufriß

Fig. 3 eine Teildarstellung des Aufrisses von Fig. 2 im geöffneten Zustand

Fig. 4 die Vorrichtung in Draufsicht im geöffneten Zustand

Fig. 5 ein Blockschaltbild der Vorrichtung

Fig. 6 Prinzipschema einer Wartungsprüfeinrichtung mit einer erfindungsgemäßen Vorrichtung

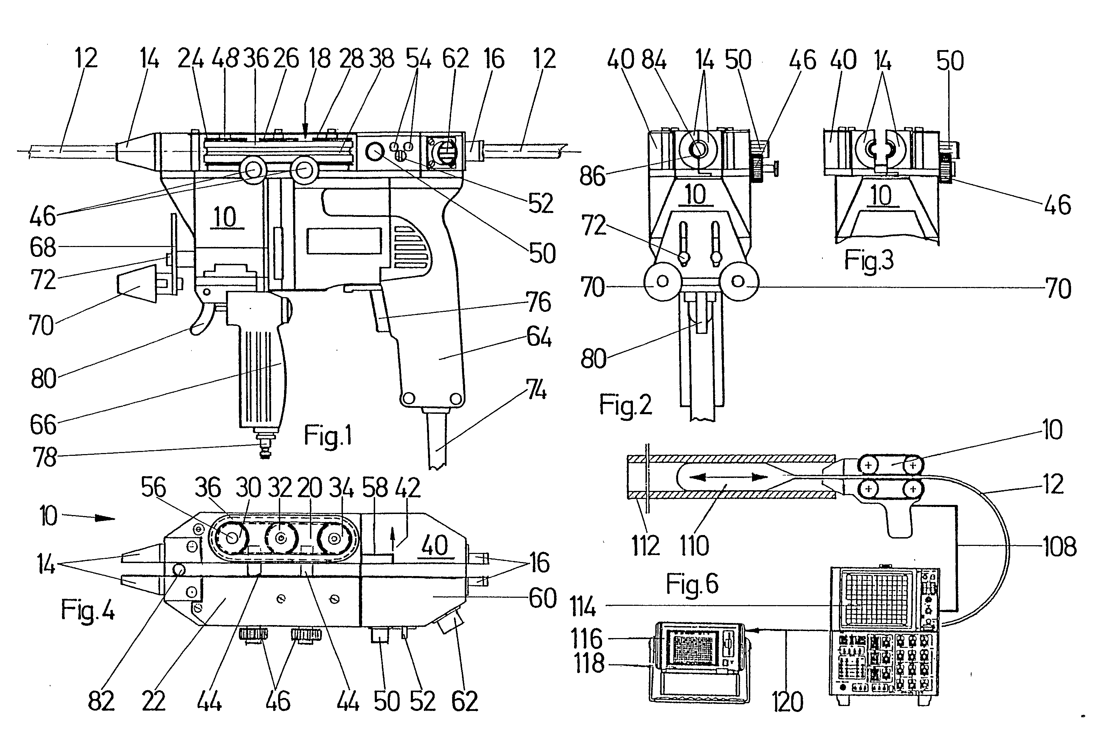

Die Figuren 1 bis 4 zeigen einen Sondentreiber 10 für manuellen Einsatz in verschiedenen Ansichten, wie im einzelnen oben angegeben. Er ist für die Wartungsprüfung von Wärmetauscher- und Kondensatorrohren im eingebauten Zustand vorgesehen und dient dazu, ein Kabel 12, dessen vorderes Ende an einer Prüfsonde und dessen hinteres Ende an eine elektronische Auswerteeinrichtung angeschlossen ist, in ein zu prüfendes Rohr einzuführen und aus demselben wieder herauszuziehen. Die Prüfung findet beim Herausziehen statt. Anstelle des Kabels kann auch ein besonderer Schubschlauch mit der Prüfsonde verbunden sein, der in seinem Inneren das Anschlußkabel für die Prüfsonde birgt. Das Kabel 12 tritt durch eine Einlaufdüse 14 in den Treiber 10 ein und verläßt diesen durch eine Auslaufdüse 16. Sowohl Einlauf- als auch Auslaufdüse (14, 16) sind in zwei Hälften teilbar, wie am besten aus Fig. 3 und 4 ersichtlich und wie später noch näher erläutert werden soll. Die Führungdüsen 14, 16 können ausgewechselt werden, so daß für unterschiedliche Durchmesser von Schubschlauch oder Kabel 12 eine Anpassung des Bohrungsdurchmessers der Führungsdüsen 14, 16 möglich wird. Die Einlaufdüse 14 besitzt aus dem bereits genannten Grunde Kegelform. Im geschlossenen Zustand des Sondentreibers 10 wird das Kabel 12 kraftschlüssig von zwei Treibanordnungen 18, 20 gefaßt, von denen in Figur 1 nur die linke (18) sichtbar ist. In Figur 4, die den Sondentreiber 10 im geöffneten Zustand darstellt, ist die rechte Treibanordnung 20 nach Abnahme eines Deckels sichtbar, während ein entsprechender Deckel 22 den Blick auf die linke (18) versperrt. Die beiden Treibanordnungen 18, 20 sind im wesentlichen gleich aufgebaut und bestehen jeweils aus einem Treibriemen 36 und einem Satz von Rollen 24, 26, 28; 30, 32, 34. Bei den Treibriemen 36 handelt es sich um Zahnriemen, auf deren Außenseite eine Kunststoffbeschichtung aus vorzugsweise Polyurethan aufgetragen wurde. Die Beschichtung ist mit einer Nut 38 versehen, die zum Kontakt mit dem Kabel 12 bestimmt ist. Diese weist eine dem Umfang des Kabels 12 entsprechende Rundung auf, kann aber auch V-förmig ausgeführt sein, wenn unterschiedlich Kabel- oder Schubschlauchdurchmesser getrieben werden sollen. Die Rollen 24 - 34 weisen eine Verzahnung auf, die mit derjenigen der Zahnriemen korrespondiert, so daß ein schlupffreier Lauf der Treibriemen 36 auf den Rollen gesichert ist. Jeweils zwei der Rollen (24, 28; 30, 34) sind als Umlenkrollen eingesetzt, während die Rollen 26 und 32 Stützfunktionen ausüben. Die Rollen 30, 32, 34 wie auch die rechten Hälften der beiden Führungsdüsen 14, 16 sind in einem Block 40 eingebaut, der gegenüber den übrigen Teilen des Sondentreibers 10 in der horizontalen Ebene in Richtung von Pfeil 42 verschiebbar ist. Block 40 wird dabei von zwei Schienen 44 geführt. Zwei Rändelmuttern 46 erlauben es, den Block 40 in geschlossener Stellung nach Einlegen des Kabels 12 festzulegen. Von den Achsen der Rollen ist lediglich die vordere linke (48) als Treibachse starr mit der Rolle 24 verbunden. Sie wird angetrieben von einem in der Drehzahl regelbaren und in der Laufrichtung umkehrbaren Getriebemotor, der im Inneren des Sondentreibers 10 eingebaut ist und hier nicht sichtbar ist. Die Drehzahl läßt sich über einen Drehknopf 50 einstellen. Die Umkehrung der Laufrichtung ist durch automatische Steuerung oder von Hand mittels Schalter 52 möglich, wobei die Laufrichtung durch Aufleuchten einer der beiden Leuchtdioden 54 angezeigt wird. Rolle 30 ist über eine Welle 56 mit einem Drehimpulsgeber verbunden, der ebenfalls nicht sichtbar im Inneren des Sondentreibers 10 eingebaut ist. Damit wird erreicht, daß man ein sicher mit der Bewegung des Kabels 12 verknüpftes Signal erhält, da ein Schlupf zwischen Kabel und und der leicht laufenden Treibanordnung 20 ausgeschlossen ist. Ein weiteres für die Steuerung wichtiges Signal erhält man aus einem Geber 58, der z. B. als Optokoppler ausgebildet sein kann und beim Vorbeilauf einer durch einen hellen Streifen markierten Stelle des Kabels 12 einen Impuls abgibt. Dieser kann zum automatischen Umkehren der Laufrichtung des Antriebes oder Abschalten des letzteren benutzt werden. Die Schaltkreise zur elektronischen Steuerung sind unter einer Abdeckplatte 60 im Sondentreiber 10 untergebracht. Eine Steckdose 62 dient zur Verbindung dieser Schaltkreise mit einem Netzteil. Zur bequemen Handhabung des Sondentreibers 10 mit beiden Händen dienen die Handgriffe 64 und 66. Die Handhabung wird weiter erleichtert durch eine verstellbare Abstützhilfe 68 mit zwei Stützkegeln 70, die in Öffnungen des Rohrbodens eingeführt werden können, nachdem man eine dem Lochabstand am Rohrboden entsprechende passende Einstellung gewählt und mit Schrauben 72 festgelegt hat. Der Strom für den Betrieb des Getriebemotors wird über ein besonderes Netzkabel 74 herangeleitet. Mit einem Hauptschalter 76, der wie der Auslöser einer Pistole am Griff 64 angebracht ist, wird der Sondentreiber 10 eingeschaltet. Zur Erleichterung des Eintreibens von Prüfsonde und Kabel 12 ist zusätzlich der Einsatz von Druckluft vorgesehen. Diese kann bei Bedarf über einen Nippel 78 am Fuß von Griff 66 eingeleitet werden. Bei Betätigung des Auslösers 80 strömt Druckluft aus einer Öffnung 82 in die Führungsdüse 14 ein. Diese besitzt an ihrem hinteren Ende eine etwa mit dem Durchmesser des Kabels 12 übereinstimmende Bohrung 84 (Fig. 2), am vorderen Ende eine etwas größere Bohrung 86. Der größere Teil der Druckluft fließt daher am Kabel 12 entlang durch die vordere Öffnung von Düse 14 in das zu prüfende Rohr hinein, wo sie auf die den Rohrquerschnitt füllende Prüfsonde auftrifft und diese vorantreiben hilft. Ein kleinerer Teil der Druckluft tritt auch durch die rückwärtige Öffnung der Düse 14 und trägt zur Reinigung der Treibriemen 36 bei. Eine gute Selbstreinigung der Treibriemen 36 wird auch dadurch möglich, daß diese seitlich offen eingebaut sind und daß die umlaufenden Treibriemen Schmutzteilchen und Feuchtigkeit ungehindert nach außen schleudern können.

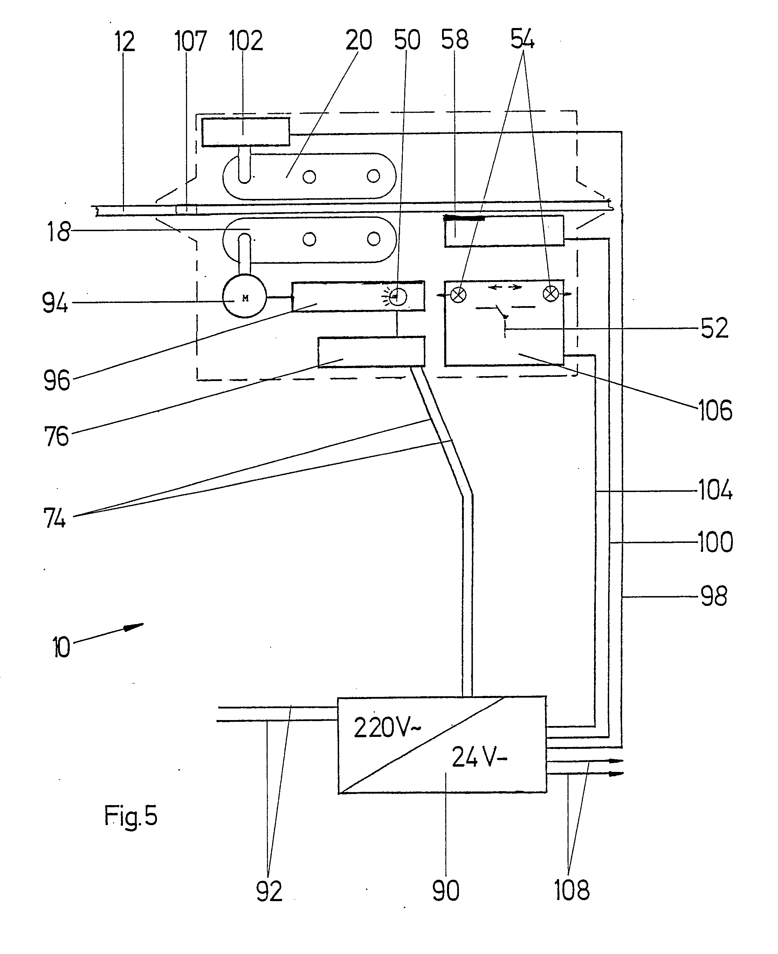

Ein Blockschaltbild gemäß Figur 5 soll das Verständnis des erfindungsgemäßen Sondentreibers 10 weiter erleichtern. Darin ist eine durch eine Leitung 92 an das Stromnetz anschließbare Netzeinheit 90 enthalten, die neben der Stromversorgung für die Steuerelektronik eine Relaissteuerung aufweist. Der Antriebsmotor 94 des Sondentreibers 10 ist über Kabel 74, Hauptschalter 76 und eine Geschwindigkeitsregelung 96 mit der Netzeinheit 90 verbunden. Leitungen 98 und 100 schließen den Drehimpulsgeber 102 bzw. den Geber 58 an die Netzeinheit 10 an. Eine Leitung 104 verbindet Steuerelektronik 106 und Netzeinheit 90. Die beiden Treiberanordnungen 18 und 20 umfassen das Kabel 12, an dem eine helle Markierung 107 angebracht ist. Beim Vorbeilauf der hell markierten Stelle 107 des Kabels 12 am Geber 58 ergibt sich ein elektrisches Signal, das in der Steuerelektronik 106 und in der Relaissteuerung verwertet wird. An Ausgängen 108 der Netzeinheit 90 stehen die Signale der Geber 102 und 58 für eine weitere Verwendung zur Verfügung.

Figur 6 stellt schematisch dar, wie der Sondentreiber 10 in einer Wartungsprüfeinrichtung eingesetzt wird. An der Vorderseite des Kabels 12 befindet sich eine Wirbelstromprüfsonde 110 in der Bohrung eines zu prüfenden Rohres 112. Das Kabel 12 durchläuft den Sondentreiber 10 und ist rückseitig an ein Wirbelstromprüfgerät 114 angeschlossen. Dieses hat über die Leitungen 108 Verbindung mit der Steuerung des Sondentreibers 10. Über eine Leitung 120 ist ein Schreiber 116 mit dem Wirbelstromprüfgerät 114 verbunden. Ein Ausgang 118 ermöglicht den Anschluß eines Videomonitors.

Im folgenden soll kurz die Betriebsweise der oben beschriebenen Wartungseinrichtung dargestellt werden. Nach dem Einlegen des Kabels 12 in den Sondentreiber 10 werden helle Markierungen 107 derart am Kabel 12 angebracht, daß jeweils ein Signal durch Geber 58 erfolgt, wenn sich die Sonde 110 am Anfang bzw. am Ende der vorgesehenen Prüfstrecke befindet. Sodann führt man Sonde 110 in das zu prüfende Rohr 112 ein und setzt die Einlaufdüse 14 des Sondentreibers 10 auf die Mündung des Rohres. Durch Betätigen des Hauptschalters 76 schaltet man den Antriebsmotor ein. Die Vorwärtsbewegung der Sonde 110 und des Kabels 12 kann bei Bedarf durch mittels Auslöser 80 eingeleitete Druckluft unterstützt werden. Bei Erreichen der äußersten Stellung der Sonder 110 im Rohr 112 wird automatisch durch Geber 58 die eigentliche Prüfung in Gang gesetzt. Dazu veranlaßt die elektronische Steuerung den Rücklauf der Sonde 110 durch Umsteuerung des Antriebsmotors 94, sowie das Einschalten des Prüfkanals im Wirbelstromprüfgerät 114 und des Vorschubes im Schreiber 116. Die Bewegung des letzteren wird synchronisiert durch Signale des Gebers 102. Bei Erreichen der Endstellung der Sonde 110 wird automatisch der Rücklauf der Sonde 110 beendet, werden ferner Wirbelstromprüfkanal und Schreiber-Vorschub abgeschaltet. Danach kann dann unmittelbar die Prüfung eines weiteren Rohres in Angriff genommen werden.

Will man einen Bereich eines Rohres näher untersuchen, etwa eine Stelle mit starken Korrosionssignalen des Wirbelstromprüfgerätes, so kann man vorübergehend die automatische Steuerung unterbrechen, indem man von Hand mittels Schalter 52 auf Vor- bzw. Rücklauf der Sonder 110 schaltet.

## Ansprüche

1) Vorrichtung zum Bewegen von Schubschläuchen (12) im Inneren von Rohren (112), mit mindestens zwei am Umfang des Schubschlauches (12) angreifenden, umlaufenden Treibanordnungen (18, 20), mit einem motorischen Antrieb (94), der die Treibanordnungen (18, 20) in umlaufende Bewegung versetzt, dadurch gekennzeichnet, daß die Treibanordnungen (18, 20) je einen flexiblen, endlosen Treibriemen (36) mit einer auf seiner Rückseite befindlichen Profilnut (38) aufweisen, die geeignet ist, mit dem Umfang des Schubschlauches (12) in Berührung zu treten, ferner je einen Satz von Rollen (24, 26, 28; 30, 32, 34), die den Treibriemen (36) tragen und stützen und von denen mindestens eine vom Antrieb (94) angetrieben wird.

2) Vorrichtung nach Anspruch 1, dadurch gekennzeichnet, daß zwei Treibanordnungen (18, 20) zum Einsatz kommen, die sich bezüglich des Schubschlauches (12) diametral gegenüber stehen und von denen mindestens eine in diametraler Richtung verstellbar ist.

3) Vorrichtung nach Anspruch 2, dadurch gekennzeichnet, daß auswechselbare, in zwei Hälften teilbare Führungsdüsen (14, 16) zur Führung des Schubschlauches (12) vorgesehen sind, deren Hälften jeweils starr mit einer der beiden Treibanordnungen (18, 20) verbunden sind.

4) Vorrichtung nach Anspruch 3, dadurch gekennzeichnet, daß die vordere Führungsdüse (14) kegelförmig ausgeführt ist.

5) Vorrichtung nach einem der vorhergehenden Ansprüche, dadurch gekennzeichnet, daß die Profilnut (38) V-förmig ist.

6) Vorrichtung nach einem der vorhergehenden Ansprüche, dadurch gekennzeichnet, daß nur eine der Treibanordnungen (18, 20) vom Antrieb (94) angetrieben wird, daß eine andere einen Wegsignalgeber (102) antreibt.

7) Vorrichtung nach einem der vorhergehenden Ansprüche, dadurch gekennzeichnet, daß als Treibriemen Zahnriemen (36) und als Rollen entsprechende Zahnräder (24 - 34) benutzt werden.

8) Vorrichtung nach Anspruch 7, dadurch gekennzeichnet, daß im Handel erhältliche Zahnriemen (36) benutzt werden, auf deren Rückseite eine die Profilnut (38) enthaltende Beschichttung aus Kunststoff, vorzugsweise Polyurethan aufgebracht worden ist.

9) Vorrichtung nach einem der vorhergehenden Ansprüche, dadurch gekennzeichnet, daß zur Unterstützung des Eintreibens des Schubschlauches (12) zusätzlich der Einsatz von Druckluft vorgesehen ist, die in die vordere Führungsdüse (14) eingeleitet wird.

10 Vorrichtung nach einem der vorhergehenden Ansprüche, dadurch gekennzeichnet, daß entlang der Bahn des Schubschlauches (12) ein Geber (58) angebracht ist, der beim Vorbeilauf einer Markierung (106) des Schubschlauches (12) ein elektrisches Signal abgibt.

Fig.1

Fig.2

Fig.3

Fig.4

Fig.6

A320

Fig. 5

A 320